# EUROPEAN PATENT SPECIFICATION

(11) **EP 0 538 723 B1**
(45) Date of publication and mention of the grant of the patent: **10.01.1996**
(21) Application number: 92117527.9
(22) Date of filing: 14.10.1992
(51) Int. Cl.: B60C 1/00

(54) **Tire with dual cap tread**
Reifen mit Lauffläche aus zwei Schichten
Pneumatique avec une bande de roulement à deux couches

(30) Priority: 21.10.1991 US 779669
(43) Date of publication of application: 28.04.1993
(73) Proprietor: THE GOODYEAR TIRE & RUBBER COMPANY, Akron, Ohio 44316-0001 (US)
(72) Inventor: Sandstrom, Paul Harry, Tallmadge, Ohio 44278 (US); Segatta, Thomas Joseph, Fairlawn, Ohio 44333 (US); Massie II, Johnny Dale, Hudson, Ohio 44236 (US)
(74) Representative: Leitz, Paul

(56) References cited:
- EP-A- 0 098 353
- EP-A- 0 505 904
- PATENT ABSTRACTS OF JAPAN vol. 10, no. 231 (M-506)(2287) 12 August 1986 & JP-A-61 064 503 ( SUMITOMO RUBBER IND KK ) 02 April 1986

## Description

### Field

This invention relates to a pneumatic rubber tire having a rubber tread of a dual cap construction. More specifically, the invention relates to such a tire having a tread cap of inner and outer elastomeric compositions.

The invention is particularly applicable to a relatively thick tire tread with relatively deep grooves as may be found, for example, on truck tires.

### Background

Truck tires conventionally have relatively thick treads and correspondingly relatively deep grooves.

Exceptional stress is often transmitted to the bottom, or inner region, of the deep grooves because of the leverage and bending moment administered by the high walls of the tread lugs associated with the grooves.

Such stress can cause the surface of the grooves, near their bottom, to crack, particularly when the tire is being used under relatively heavy service conditions. Such groove cracking at the inner region of the grooves is not normally desirable because of an undesirable appearance and also because such cracks could propagate, become larger, and trap water, dirt and road debris, with various attendant difficulties.

Typically, the outer cap portion of the tread contains the visible tread grooves and associated lugs, or raised portions, which is designed to contact the ground. The cap portion usually includes such tread configuration and usually extends to a tread depth of just below the grooves of the tread. The rubber for the cap portion is often compounded to provide good skid resistance, treadwear and rolling resistance for the tire.

Sometimes the tread is also provided with a base portion positioned beneath the cap portion and, being a part of the tread itself, is located between the tread cap and an underlying supporting belt or carcass portion of the tire. However, it is the cap portion that contains the lugs and groove configuration of the tread. Such tire construction is well known.

A tread cap composed of dual layers of rubber has been proposed. The outer layer would be expected to contact the road and the inner layer, adjacent to the carcass or tread base, as the case may be, would be designed to counteract or reduce the aforesaid groove cracking. Such inner layer of the tread cap would include the inner region of the aforesaid tread grooves, at least the deep grooves of the tread.

Accordingly, it is envisioned that the inner cap layer is an inward extension of the outer cap layer rather than outward extension of a tire carcass portion or tread base layer, as the case may be.

The use of trans 1,4-polybutadiene for various purposes has been disclosed, including, for example, tire tread rubber compounds (See, for example, Japanese Patent Publication Nos. 60-133,036; 62-101,504 and 61-143,453) and U.S. Patent Nos. 4,510,291 and 5,025,059. It has been proposed to use trans 1,4-polybutadiene as a component of the base of a tread cap/base construction.

However, in this application, the requirements for the inner cap layer are more similar to and aligned with those of the outer cap layer (treadwear, skid resistance, etc.) instead of a base of a tread of a cap/base construction. This is because as the tire tread wears, the inner cap portion is expected to eventually become exposed to road surface and require roadwear and traction properties, similar to the outer cap portion, which are requirements not normally required of the tread base component of the tread, which is not normally intended to be the road contacting part of the tire.

Uniquely, trans 1,4-polybutadiene is typically a thermoplastic resin rather than rubber in its uncured state at room temperature by virtue of its high crystallinity. Because it contains many double bonds in its backbone, it can, however, be suitably blended and co-cured with elastomers.

### Disclosure and Practice of the Invention

In accordance with this invention, a rubber tire is provided having a rubber tread of a dual cap construction with lugs and associated grooves therein, where said cap is comprised of an inner cap layer and an outer cap layer adapted to be ground contacting; where said outer cap layer encompasses at least 25 percent, preferably a major portion, and more preferably 75 to 85 percent of the outer depth of the deepest tread grooves; and where said inner cap layer encompasses up to 75 percent, preferably a minor portion and more preferably 15 to 25 percent of the inner depth of the deepest tread grooves; and where said inner cap layer underlies and extends beneath all of the tread grooves; where said inner cap layer is a sulfur cured rubber layer composition comprised of, based on 100 parts by weight rubber (phr), (A) 40 to 95, preferably 50 to 80 parts by weight of at least one diene rubber selected from natural and/or synthetic cis 1,4-polyisoprene rubber, cis 1,4-polybutadiene rubber, styrene/butadiene copolymer rubber, styrene/isoprene/butadiene terpolymer rubber and 3,4-polyisoprene rubber; and (B) 5 to 60, preferably 20 to 50 parts by weight of a trans 1,4-polybutadiene characterized by having 75 to 85 percent trans 1,4-content.

In the description of the tread cap of this invention, in one aspect the outer cap layer is described as being a major portion of the tread cap and, correspondingly, the inner cap layer being of a minor portion. This reference is used in a conventional sense in that it is intended that the outer cap layer thickness be more than 50 percent (e.g. at least 51 percent) of the tread cap thickness and, correspondingly, that the inner cap layer be of a minor portion or less than 50 percent (e.g. up to 49 percent) of the overall cap thickness, as measured from the outer tread surface to the "bottom" of the tread cap which extends beneath the tread grooves.

Further, the tread grooves are conveniently referenced as to their outer portions (for the outer cap layer) and inner portions (for the inner cap layer). The outer portion of the grooves typically communicate directly with the outer, exposed surface of the tread and the inner portions extend to the bottom of the grooves.

In one aspect, the outer and inner cap layers are described as encompassing the respective groove portions in that they are actually a part of the walls of the grooves.

The outer cap layer is described as being adapted to be ground contacting in a sense that it is intended that it is the surface of the tire tread which is intended to be in contact with a substrate (e.g. ground) over which the tire is intended to travel.

Preferably, such trans 1,4-polybutadiene is characterized by having 75 to an 85 percent of its butadiene repeat units of a trans 1,4-isomeric structure, 2 to 18 percent of its units of a 1,2-structure and 2 to 18 percent of its units of a cis 1,4-structure and, in its uncured state, at least one melting point in the range of 35°C to 60°C.

In one aspect of the invention, the outer cap portion is a sulfur cured rubber composition exclusive of trans 1,4-polybutadiene. Thus, in such aspect, the outer cap portion does not contain trans 1,4-polybutadiene.

For the purposes of this description, the "compounded" rubber compositions refer to the respective rubber compositions which have been compounded with appropriate compounding ingredients such as, for example, carbon black, oil, stearic acid, zinc oxide, silica, wax, antidegradants, resin(s), sulfur and accelerator(s).

In the practice of this invention, the said tread cap may have an overall thickness in a range of 6.5 to 25 millimeters, with the outer cap layer having a thickness of 4.5 to 20 millimeters and the inner cap layer having a thickness of 2 to 20.5 millimeters. While these thickness may be considered as being representative for descriptive purposes, individual tread thickness may vary from tire to tire, depending somewhat upon the tire size and its intended service conditions.

Indeed, for large off-the-road and large agricultural tires, the overall tread cap thickness may be even up to 140mm, and said inner cap layer has a thickness of up to 35mm or more.

While the grooves in any tire tread, between associated lugs, may be of a multitude of depths, the deepest grooves may have a depth of 5.5 to 22 millimeters, which is a measure of the height of their walls. Preferably, 15 to 25 percent or, if the tires intended service warrants, up to 75 percent, of the depth of the deepest grooves are contained by the said inner cap rubber layer, whereas the shallowest grooves may be completely contained in the outer cap portion, again depending on the type and intended service of the tire.

Thus, in one aspect of the invention, a tread of said dual cap construction is provided where up to 75 percent of the depth of the tread's deepest grooves are encompassed by the said inner cap layer. In a preferred aspect, 15 to 25 percent of the depth of the tread's deepest grooves are encompassed by the inner cap layer.

The inner cap layer is not considered to be simply an extension of a tire carcass or a tread base layer of a tire or a tire tread's cap/base construction. This is because the inner cap layer now actually contains the lower tread groove region, whereas a tread base is conventionally considered to basically exclude the tread grooves. Also, the desired physical properties for the inner cap layer, such as, for example, treadwear, cut growth resistance, tear and flex fatigue resistance, more closely approximate the desired properties for the outer cap layer rather than for a base layer in a tread cap/base construction or a tread supporting tire carcass, as the case may be.

The trans 1,4-polybutadiene utilized by this invention might be prepared, for example, by anionic polymerization batch or continuous of 1,3-butadiene in an organic solvent and in the presence of cobalt octoate and triethyl aluminum as a catalyst system with a para alkyl substituted phenol as a catalyst modifier.

The trans 1,4-polybutadiene, in its uncured state, has been observed to exhibit at least one softening or melting point.

In the practice of this invention, the outer tread cap layer rubber composition may be comprised of at least one rubber selected, for example, from at least one of cis 1,4-polyisoprene rubber, both natural and synthetic, 3,4-polyisoprene rubber, styrene/butadiene copolymer rubbers, styrene/isoprene/butadiene terpolymer rubbers, and cis 1,4-polybutadiene rubber. Preferably it is comprised of a combination of natural rubber or cis 1,4-polyisoprene rubber and cis 1,4-polybutadiene rubbers. In one aspect, the outer cap layer is exclusive of trans 1,4-polybutadiene.

A base rubber composition, if used in combination with and underlying the cap inner rubber layer, may be, for example, comprised of various sulfur curable rubbers such as, for example, 1,4-polyisoprene rubber, natural or synthetic 1,4-polybutadiene rubber and styrene/butadiene copolymer rubber. It one aspect, it may contain trans 1,4-polybutadiene.

It is readily understood by those having skill in the art that the rubber compositions of the inner and outer cap rubbers would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical additions of carbon black comprise 20 to 100 parts by weight of diene rubber (phr), preferably 30 to 60 phr. Typical amounts of tackifier resins, if used, comprise 0.5 to 10 phr, usually 1 to 5 phr. Typical amounts of processing aids may comprise 1 to 20 phr. Such processing aids can include, for example, aromatic, napthenic, and/or paraffinic processing oils. Silica, if used, may be used in an amount of 5 to 25 phr, often with a silica coupling agent. Representative silicas may be, for example, hydrated amorphous silicas. Typical amounts of antioxidants may comprise 1 to 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise about 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide. The presence and relative amounts of the above additives are considered to be not an aspect of the present invention which is more primarily directed to the utilization of specified blends of rubbers in tire treads.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, with a range of from 1.5 to 2.25 being preferred.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.0 phr. In another embodiment, combinations of two or more accelerators which is generally used in the larger amount (0.5 to 1.0 phr), and a secondary accelerator which is generally used in smaller amounts (0.05-0.50 phr) in order to activate and to improve the properties of the vulcanizate. Combinations of these accelerators have been known to produce a synergistic effect of the final properties and are somewhat better than those produced by use of either accelerator alone. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention which is more primarily directed to the utilization of specified blends of rubbers in tire treads, particularly the inclusion of the trans 1,4-polybutadiene in the tread inner cap layer.

The tire can be built, shaped, molded and cured by various methods which will be readily apparent to those having skill in such art.

The prepared tire of this invention is conventionally shaped and cured by methods known to those having skill in such art.

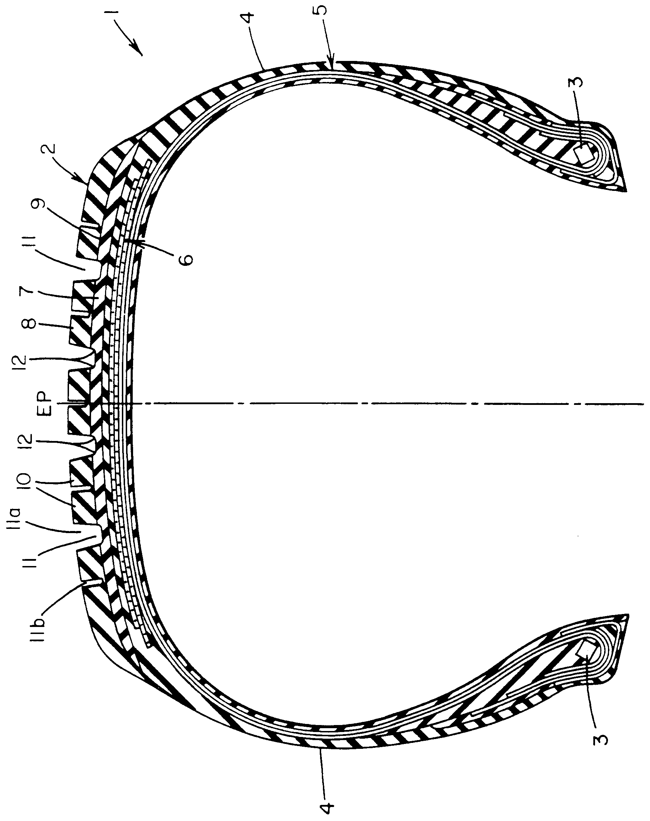

For a further understanding of the invention, reference is made to the accompanying drawing.

Referring to the drawing, a cross-section of a radial ply pneumatic rubber tire 1 is shown.

The tire 1 is comprised of a tread 2, two beads, or bead elements 3, sidewalls 4 abridging said tread 2 and bead elements 3 and a belt 6 and ply 5 for supporting said tread 2 and sidewalls 4. This is considered to be a description of a somewhat conventional radial ply pneumatic rubber tire.

In accordance with this invention, the tread 2 is represented as a cap element which itself is divided into an inner cap portion, or layer, 7 and an outer cap portion, or layer, 8. A dividing line 9 is shown, for convenience, between the inner cap portion 7 and outer cap portion 8.

The tread 1 is also configured with lugs 10 and grooves 11. While such grooves 11 may be of various depths, for illustration purposes, relatively deep grooves 11a and shallow grooves 11b are depicted.

Also pointed out for the deep grooves 11b are their inner, bottom, or base, radii 12 located at the bottom of the grooves 11.

A review of the drawing shows that the inner cap portion 7 extends outward and encompasses at least a portion of the depth of the deepest grooves 11a as is more clearly shown by the dividing line 9.

The inner cap portion 7 also underlies and extends beneath all of the grooves 11 of the overall tread cap 2.

As indicated in this specification, the inner cap portion 7 contains the trans 1,4-polybutadiene and is designed to retard or substantially eliminate the cracking of the deep grooves 11a encompassed by the inner cap portion 7, particularly at their inner radii 12.

The outer cap layer 8 encompasses a major portion of the outward extension of the lugs 10 and associated grooves 11 and particularly 11b.

The invention may be better understood by reference to the following example in which the parts and percentages are by weight unless otherwise indicated.

### EXAMPLE I

Mixtures of diene rubbers with trans 1,4-polybutadiene having two softening points of about 40°C and 60°C, in its uncured state, were prepared comprised of the following recipe shown in Table 1 as Experiments A, B and C. Experiment A is considered a control.

**Table 1**

| Material | Parts Exp A (Control) | Parts Exp B | Parts Exp C |
|---|---|---|---|
| Natural rubber/or cis 1,4-polyisoprene rubber | 100 | 60 | 60 |
| Cis 1,4-polybutadiene rubber | 0 | 20 | 40 |
| Trans 1,4-polybutadiene | 0 | 20 | 0 |
| Carbon black (N100 series) | 46 | 46 | 46 |
| Processing oil, wax, zinc oxide, and stearic acid | 6.5 | 6.5 | 6.5 |
| Antidegradants | 2.5 | 2.5 | 2.5 |
| Accelerator | 1.1 | 1.1 | 1.1 |
| Sulfur | 1.5 | 1.5 | 1.5 |
| Retarder | 0.2 | 0.2 | 0.2 |

Conventional, amounts of antidegradant(s) (paraphenylene diamine type), zinc oxide, stearic acid, accelerator of the sulfenamide type were used.
1. A trans 1,4-polybutadiene for this invention characterized by high trans 1,4-polybutadiene content (80 percent trans 1,4-).

The trans 1,4-polybutadiene for this example was characterized by having a trans 1,4-content of about 80 percent, a cis 1,4-content of about 5 percent and a vinyl 1,2-content of about 15 percent. It was further characterized by having an number average molecular weight (Mn) of about 205,000 and a weight average molecular weight (Mw) of about 430,000. It was additionally characterized by having a Tg of about -75°C and melting points (Tm) of 40°C (major) and 60°C (minor). (Both the Tg and Tm can be determined by differential scanning calorimeter at 10°C per minute).

Such trans 1,4-polybutadiene can be suitably prepared by batch polymerizing 1,3-butadiene in an aliphatic hydrocarbon solution (e.g. hexane) in the presence of a catalyst of cobalt octoate and triethylaluminum with p-dodecylphenol modifier, although it can also be prepared by continuous polymerization with a suitable gel inhibitor.

### EXAMPLE II

The prepared rubber compositions were cured at a temperature of about 150°C for about 20 minutes and the resulting cured rubber samples evaluated for their physical properties as shown in the following Table 2. The experimental samples A, B and C correspond to the experimental samples A, B and C of Example I.

Cured sheets or strips were prepared for each of samples A, B and C for modulus, tensile and elongation tests; for rebound test, for tear test and for the belt crack test. The samples for the belt crack test contained a multiplicity of grooves with various widths and depths.

**Table 2**

| Properties | Exp A (Control) | Exp B | Exp C |
|---|---|---|---|
| 300% Modulus (MPa) | 10.7 | 9.6 | 10.6 |
| Tensile (MPa) | 22.9 | 21.2 | 20.1 |
| Elongation (percent) | 498 | 489 | 456 |
| Rebound (23°C) | 48.8 | 55.4 | 56.7 |
| Tear (23°C) (Strebler adhesion)¹(N) | 235 | 261 | 211 |

| Belt crack test² | | | |
|---|---|---|---|
| (a) days³ | 13 | 15 | 15 |
| (b) appearance⁴ | 10 | 2 | 2 |

| | | | |
|---|---|---|---|
| 1. A test of adhesion to itself involving pulling strips apart at a 180° angle (5 mm wide strips), measured in Newtons of force. | | | |
| 2. (ASTM test No. D430) | | | |
| 3. Number of days over which the test was run. | | | |
| 4. A visual evaluation with a rating of 10 being the worst (deep cracks across the sample in virtually all bottom groove radii) and 1 being best (none of such groove cracking). | | | |

Thus, the tear resistant property and the resistance to fatigue cracking of the cured rubber are significantly higher for Exp. B. Thus, the trans 1,4-polybutadiene is considered an excellent candidate for the inner cap layer in a tread with a dual cap rubber.

While certain representative embodiments and details have been shown for the purpose of illustrating the invention, it will be apparent to those skilled in this art that various changes and modifications may be made therein without departing from the scope of the invention as defined by the appended claims.

## Claims

1. A rubber tire (1) having a rubber tread (2) of a dual cap construction with lugs and associated grooves therein, where said cap is comprised of an inner cap layer (7) and an outer cap layer (8) adapted to be ground contacting; characterized in that said outer cap layer (8) contains at least 25 percent and up to 85 percent of the outer depth of the deepest tread grooves; and where said inner cap layer (7) encompasses up to 75 percent of the inner depth of the deepest tread grooves, and where said inner cap layer underlies and extends beneath all of the tread grooves; and further characterized in that said inner cap layer is a sulfur cured rubber layer composition comprised of, based on 100 parts by weight rubber (phr), (A) 40 to 95, preferably 50 to 80 parts by weight of at least one diene rubber selected from natural and/or synthetic cis 1,4-polyisoprene rubber, cis 1,4-polybutadiene rubber, styrene/butadiene copolymer rubber, styrene/isoprene/butadiene terpolymer rubber and 3,4-polyisoprene rubber; and (B) 5 to 60, preferably 20 to 50 parts by weight of a trans 1,4-polybutadiene characterized by having 75 to 85 percent trans 1,4-content.

2. The tire of claim 1 characterized in that said outer cap layer is of a rubber composition exclusive of trans 1,4-polybutadiene.

3. The tire of claim 2 characterized in that 15 to 25 percent of the depth of the tread's deepest grooves is encompassed by the said inner cap layer.

4. The tire of claim 2 characterized in that a minor portion of the depth of the tread's deepest grooves is encompassed by the said inner cap layer.

5. The tire of claim 4 characterized in that the tread cap has an overall thickness of 6.5 to 25 millimeters, with the outer cap layer having a thickness of 4.5 to 20 millimeters and the inner cap having a thickness of 2 to 20.5 millimeters.

6. The tire of claim 2 characterized in that the overall tread cap thickness is up to about 140mm and said inner cap layer has a thickness of up to 35mm.

7. The tire of claim 2 characterized in that the said trans 1,4-polybutadiene is characterized by having 75 to an 85 percent of its butadiene repeat units of a trans 1,4-isomeric structure, 2 to 18 percent of its units of a 1,2-structure and 2 to 18 percent of its units of a cis 1,4-structure and, in its uncured state, at least one melting point in the range of 40°C to 60°C.

8. The tire of claim 2 characterized in that the said outer cap layer is comprised of at least one rubber selected from at least one of cis 1,4-polyisoprene rubber, both natural and synthetic, 3,4-polyisoprene rubber, styrene/butadiene copolymer rubber, styrene/isoprene butadiene terpolymer rubbers, and cis 1,4-polybutadiene rubber.

## Patentansprüche

1. Gummireifen (1), der eine Gummilauffläche (2) mit einer Doppelkronen-Konstruktion mit Stollen und damit verbundenen Rillen darin aufweist, worin die Krone eine innere Kronenlage (7) und eine äußere Kronenlage (8), die so angepaßt ist, daß sie Boden-berührend ist, umfaßt; dadurch gekennzeichnet, daß die äußere Kronenlage (8) mindestens 25 Prozent und bis zu 85 Prozent der äußeren Tiefe der tiefsten Laufflächenrillen enthält; und worin die innere Kronenlage (7) bis zu 75 Prozent der inneren Tiefe der tiefsten Laufflächenrillen umfaßt, und worin die innere Kronenlage unter allen Laufflächenrillen liegt und sich unterhalb dieser erstreckt; und ferner dadurch gekennzeichnet, daß die innere Kronenlage eine Schwefelvulkanisierte Kautschuklagenzusammensetzung ist, die, bezogen auf 100 Gewichtsteile Kautschuk (TpH), umfaßt (A) 40 bis 95, vorzugsweise 50 bis 80 Gewichtsteile mindestens eines Dienkautschuks, der aus natürlichem und/oder synthetischem cis-1,4-Polyisopren-Kautschuk, cis-1,4-Polybutadien-Kautschuk, Styrol/Butadien-Copolymer-Kautschuk, Styrol/Isopren/Butadien-Terpolymer-Kautschuk und 3,4-Polyisopren-Kautschuk ausgewählt ist; und (B) 5 bis 60, vorzugsweise 20 bis 50 Gewichtsteile eines trans-1,4-Polybutadiens, das dadurch gekennzeichnet ist, daß es 75 bis 85 Prozent trans-1,4-Gehalt aufweist.

2. Reifen nach Anspruch 1, dadurch gekennzeichnet, daß die äußere Kronenlage aus einer Kautschukzusammensetzung ohne trans-1,4-Polybutadien besteht.

3. Reifen nach Anspruch 2, dadurch gekennzeichnet, daß 15 bis 25 Prozent der Tiefe der tiefsten Rillen der Lauffläche von der inneren Kronenlage umfaßt werden.

4. Reifen nach Anspruch 2, dadurch gekennzeichnet, daß ein kleinerer Teil der Tiefe der tiefsten Rillen der Lauffläche von der inneren Kronenlage umfaßt wird.

5. Reifen nach Anspruch 4, dadurch gekennzeichnet, daß die Laufflächenkrone eine Gesamtdicke von 6,5 bis 25 mm aufweist, wobei die äußere Kronenlage eine Dicke von 4,5 bis 20 mm und die innere Krone eine Dicke von 2 bis 20,5 mm hat.

6. Reifen nach Anspruch 2, dadurch gekennzeichnet, daß die Gesamt-Laufflächenkronendicke bis zu 140 mm beträgt und die innere Kronenlage eine Dicke von bis zu 35 mm aufweist.

7. Reifen nach Anspruch 2, dadurch gekennzeichnet, daß das trans-1,4-Polybutadien dadurch gekennzeichnet ist, daß es 75 bis 85 Prozent seiner sich wiederholenden Butadien-Einheiten mit einer trans-1,4-isomeren Struktur, 2 bis 18 Prozent seiner Einheiten mit einer 1,2-Struktur und 2 bis 18 Prozent seiner Einheiten mit einer cis-1,4-Struktur und in seinem unvulkanisierten Zustand mindestens einen Schmelzpunkt im Bereich von 40°C bis 60°C aufweist.

8. Reifen nach Anspruch 2, dadurch gekennzeichnet, daß die äußere Kronenlage mindestens einen Kautschuk umfaßt, der ausgewählt ist aus mindestens einem von sowohl natürlichem als auch synthetischem cis-1,4-Polyisoprenkautschuk, 3,4-Polyisopren-Kautschuk, Styrol/Butadien-Copolymer-Kautschuk, Styrol/Isopren/Butadien-Terpolymer-Kautschuken und cis-1,4-Polybutadienkautschuk.

## Revendications

1. Bandage pneumatique en caoutchouc (1) comportant une bande de roulement en caoutchouc (2) de construction à double recouvrement contenant des côtes et des rainures associées, ledit recouvrement comprenant une couche de recouvrement interne (7) et une couche de recouvrement externe (8) conçue pour venir se mettre en contact avec le sol; caractérisé en ce que ladite couche de recouvrement externe contient au moins 25 pour cent et jusqu'à 85 pour cent de la profondeur externe des rainures de bande de roulement les plus profondes; et dans lequel ladite couche de recouvrement interne (7) englobe jusqu'à 75 pour cent de la profondeur interne des rainures de bande de roulement les plus profondes, et dans lequel ladite couche de recouvrement interne est sous-jacente à toutes les rainures de bande de roulement et s'étend en dessous d'elles; et caractérisé, en outre, en ce que ladite couche de recouvrement interne est une composition de couche de caoutchouc vulcanisé au soufre comprenant, basées sur 100 parties en poids de caoutchouc (phr) (A) de 40 à 95, de préférence de 50 à 80 parties en poids d'au moins un caoutchouc diénique choisi parmi le caoutchouc naturel et/ou le caoutchouc synthétique de cis-1,4-polyisoprène, le caoutchouc de cis-1,4-polybutadiène, le caoutchouc de copolymère de styrène/butadiène, le caoutchouc de terpolymère de styrène/isoprène/butadiène et le caoutchouc de 3,4-polyisoprène; et (B) de 5 à 60, de préférence de 20 à 50 parties en poids d'un trans-1,4-polybutadiène caractérisé par le fait qu'il possède une teneur trans-1,4 à raison de 75 à 85 pour cent.

2. Bandage pneumatique selon la revendication 1, caractérisé en ce que ladite couche de recouvrement externe est une composition de caoutchouc ne contenant pas du trans-1,4-polybutadiène.

3. Bandage pneumatique selon la revendication 2, caractérisé en ce que 15 à 25 pour cent de la profondeur des rainures les plus profondes de la bande de roulement englobent la couche de recouvrement interne.

4. Bandage pneumatique selon la revendication 2, caractérisé en ce qu'une portion mineure de la profondeur des rainures les plus profondes de la bande de roulement englobe ladite couche de recouvrement interne.

5. Bandage pneumatique selon la revendication 4, caractérisé en ce que le recouvrement de bande de roulement possède une épaisseur globale de 6,5 à 25 mm, la couche de recouvrement externe possédant une épaisseur de 4,5 à 20 mm et le recouvrement interne ayant une épaisseur de 2 à 20,5 mm.

6. Bandage pneumatique selon la revendication 2, caractérisé en ce que l'épaisseur globale du recouvrement de bande de roulement va jusqu'à environ 140 mm et ladite couche de recouvrement interne a une épaisseur allant jusqu'à 35 mm.

7. Bandage pneumatique selon la revendication 2, caractérisé en ce que ledit trans-1,4-polybutadiène est caractérisé par le fait que de 75 à 85 pour cent de ses motifs périodiques de butadiène possèdent une structure isomère trans-1,4, de 2 à 18 pour cent de ses motifs possèdent une structure 1,2 et de 2 à 18 pour cent de ses motifs possèdent une structure cis-1,4 à l'état non vulcanisé, au moins un point de fusion dans le domaine de 40°C à 60°C.

8. Bandage pneumatique selon la revendication 2, caractérisé en ce que ladite couche de recouvrement externe comprend au moins un caoutchouc choisi parmi au moins un des caoutchoucs ci-après : le caoutchouc de cis-1,4-polyisoprène à la fois naturel et synthétique, le caoutchouc de 3,4-polyisoprène, le caoutchouc de copolymère de styrène/butadiène, les caoutchoucs de terpolymère de styrène/isoprène/butadiène et le caoutchouc de cis-1,4-polybutadiène.
